# EUROPÄISCHE PATENTANMELDUNG

(11) **EP 1 645 481 A2**
(43) Veröffentlichungstag der Anmeldung: **12.04.2006**
(21) Anmeldenummer: 05017195.8
(22) Anmeldetag: 08.08.2005
(51) Int. Cl.: B60T 17/22

(54) **Verfahren und Vorrichtung zur Dichtheitsprüfung der Hauptluftleitung von Eisenbahnfahrzeugen**

(30) Priorität: 11.10.2004 DE 102004049655
(71) Anmelder: Few Blankenburg GmbH, 38889 Blankenburg (DE)
(72) Erfinder: Becker, Dietmar, 38889 Blankenburg (DE); Weissenborn, Uwe, 38889 Stiege (DE); Ottow, Manfred, Dr., 13465 Berlin (DE); Paul, Andre, 38889 Blankenburg (DE)
(74) Vertreter: Zinken-Sommer, Rainer

(57) **Zusammenfassung**

Die Erfindung betrifft ein Verfahren und eine Vorrichtung zur Dichtheitsprüfung der Hauptluftleitung von Eisenbahnfahrzeugen. Dieses Verfahren wird insbesondere bei Rangieranlagen angewendet, bei denen mobile oder stationäre Bremsprobegeräte zur Dichtheitsprüfung der Hauptluftleitung von Zügen eingesetzt werden.

Erfindungsgemäß wird das Zusatzvolumen V' zunächst aufgefüllt und abgesperrt. Daraufhin wird im Zusatzvolumen V' ein definiertes Leck mit einem Öffnungsquerschnitt A geöffnet und der Öffnungsquerschnitt A des Lecks dermaßen gewählt, dass ein im Zusatzvolumen V' hervorgerufener Druckabfall Δp/Δt pro Zeiteinheit einem maximal zulässigen Druckabfall Δpₘₐₓ/Δt pro Zeiteinheit für die Hauptluftleitung entspricht. Nun wird das Hauptleitungsvolumen V_{HL} des Eisenbahnfahrzeuges an das Zusatzvolumen V' angeschlossen und mit aufgefüllt. Ein resultierender Druckabfall Δpᵣₑₛ/Δt pro Zeiteinheit des an das Zusatzvolumen V' angeschlossenen Hauptleitungsvolumens V_{HL} wird ermittelt und mit dem maximal zulässigen Druckabfall Δpₘₐₓ/Δt pro Zeiteinheit verglichen. Ist der resultierenden Druckabfall Δpᵣₑₛ/Δt pro Zeiteinheit kleiner oder gleich dem maximal zulässigen Druckabfall Δpₘₐₓ/Δt pro Zeiteinheit wird die Hauptluftleitung des Eisenbahnfahrzeuges als dicht beurteilt. Ist hingegen der resultierenden Druckabfall Δpᵣₑₛ/Δt pro Zeiteinheit größer als der maximal zulässigen Druckabfall Δpₘₐₓ/Δt pro Zeiteinheit wird die Hauptluftleitung des Eisenbahnfahrzeuges als undicht beurteilt

Erfindungsgemäß wird somit durch ein definiertes Leck in der Hauptluftleitung der Einfluss des Zusatzvolumens auf die Aussage der Dichtheitsprüfung (dicht oder undicht) eliminiert. Dieses Leck ist so beschaffen, dass bei abgeschlossenem Zusatzvolumen nach vorherige Auffüllung der Leitung, Absperrung im Bremsprobegerät und Verschluss der Befüllleitung zum Anschluss an die HL des Eisenbahnfahrzeuges, im Zusatzvolumen ein Druckabfall pro Zeiteinheit entsteht, der dem Dichtheitskriterium für die HL bei der herkömmlichen Dichtheitsprüfung entspricht.

## Beschreibung

Die Erfindung betrifft ein Verfahren und eine Vorrichtung zur Dichtheitsprüfung der Hauptluftleitung von Eisenbahnfahrzeugen. Dieses Verfahren wird insbesondere bei Rangieranlagen angewendet, bei denen mobile oder stationäre Bremsprobegeräte zur Dichtheitsprüfung der Hauptluftleitung von Zügen eingesetzt werden.

Bei der Dichtheitsprüfung der Hauptluftleitung (HL) nach Stand der Technik wird die gefüllte Hauptluftleitung abgesperrt und der Druckabfall in einer bestimmten Zeit in diesem nun abgeschlossenen Volumen als Kriterium für die Dichtheit herangezogen. Das Kriterium gilt für Einzelwagen sowie auch für einen ganzen Zug. ein.

Aus DE 101 33 910 ist ein Verfahren und eine Anordnung bekannt, bei dem der in die Hauptluftleitung zur Druckerhaltung eingespeiste Volumenstrom gemessen wird. Ein bestimmter Grenzvolumenstrom ist ein Kriterium für die Dichtheit der Hauptluftleitung.

Nachteilig ist hierbei jedoch, dass festr

In DE 100 58 307 A1 wird ein Verfahren beschrieben bei dem sich das absperrende Ventil sowie der Drucksensor sich nicht im Bremsprobegerät, sondern sich außerhalb am so genannten Schlauchständer befinden. Dadurch wird das Leistungsvolumen zwischen Absperrung und Anschluss der Hauptluftleitung am Eisenbahnfahrzeug eingeschränkt.

Aus baulichen Gegebenheiten kann des Öfteren das Bremsprobegerät nicht nahe genug (≤40 m) zum Anschluss für die Hauptluftleitung (HL) am Eisenbahnfahrzeug, dem sogenannten Kupplungskopf aufgestellt werden. Aus dem Leitungsvolumen zwischen Bremsprobegerät und dem Anschluss für die HL am ersten Wagen ergibt sich ein Zusatzvolumen.

Dieses Zusatzvolumen vergrößert hierbei das eigentliche Hauptluftleitungsvolumen und bewirkt bei der herkömmlichen Dichtheitsprüfung insbesondere bei großem Zusatzvolumen und kleinem Hauptluftleitungsvolumen eine massive Beeinflussung des Prüfergebnisses. Insbesondere können eigentlich undichte HL als dicht diagnostisiert werden. Bei Leitungslängen ≤40 m (NW25) zwischen Bremsprobegerät und Anschluss für die HL am ersten Wagen kann die Beeinflussung des Prüfergebnisses noch toleriert werden.

Für größere Leitungslängen, d.h. ein größeres Zusatzvolumen, wird das in DE 100 58 307 A1 beschriebene Verfahren vorgeschlagen. Hierbei wird ein Magnetventil und ein Drucksensor außerhalb des Bremsprobegerätes am sog. Schlauchständer angeordnet. Dadurch beschränkt sich das Zusatzvolumen auf das Volumen der zur Ankopplung an dem Zug ... [bitte ergänzen].

Nachteilig bei diesem Verfahren ist jedoch, dass ... [bitte ergänzen].

Es ist somit die Aufgabe der Erfindung ein Verfahren und eine Vorrichtung bereitzustellen, mit dem eine Dichtheitsprüfung der Hauptluftleitung ohne Beeinflussung des Prüfergebnisses durch das Zusatzvolumen gewährleistet wird.

Diese Aufgabe wird erfindungsgemäß für das Verfahren durch die in Anspruch 1 und für die Vorrichtung durch die in Anspruch 5 angegebenen Merkmale gelöst.

Erfindungsgemäß wird das Zusatzvolumen V' zunächst aufgefüllt und abgesperrt. Daraufhin wird im Zusatzvolumen V' ein definiertes Leck mit einem Öffnungsquerschnitt A geöffnet und der Öffnungsquerschnitt A des Lecks dermaßen gewählt, dass ein im Zusatzvolumen V' hervorgerufener Druckabfall Δp/Δt pro Zeiteinheit einem maximal zulässigen Druckabfall Δpₘₐₓ/Δt pro Zeiteinheit für die Hauptluftleitung entspricht. Nun wird das Hauptleitungsvolumen V_{HL} des Eisenbahnfahrzeuges an das Zusatzvolumen V' angeschlossen und mit aufgefüllt.

Ein resultierender Druckabfall Δpᵣₑₛ/Δt pro Zeiteinheit des an das Zusatzvolumen V' angeschlossenen Hauptleitungsvolumens V_{HL} wird ermittelt und mit dem maximal zulässigen Druckabfall Δpₘₐₓ/Δt pro Zeiteinheit verglichen. Ist der resultierenden Druckabfall ΔPᵣₑₛ/Δt pro Zeiteinheit kleiner oder gleich dem maximal zulässigen Druckabfall Δpₘₐₓ/Δt pro Zeiteinheit wird die Hauptluftleitung des Eisenbahnfahrzeuges als dicht beurteilt. Ist hingegen der resultierenden Druckabfall Δpᵣₑₛ/Δt pro Zeiteinheit größer als der maximal zulässigen Druckabfall Δpₘₐₓ/Δt pro Zeiteinheit wird die Hauptluftleitung des Eisenbahnfahrzeuges als undicht beurteilt

Erfindungsgemäß wird somit durch ein definiertes Leck in der Hauptluftleitung, welches nach Anspruch 2 insbesondere im Bremsprobegerät angeordnet ist, der Einfluss des Zusatzvolumens auf die Aussage der Dichtheitsprüfung (dicht oder undicht) eliminiert. Dieses Leck ist so beschaffen, dass bei abgeschlossenem Zusatzvolumen nach vorherige Auffüllung der Leitung, Absperrung im Bremsprobegerät und Verschluss der Befüllleitung zum Anschluss an die HL des Eisenbahnfahrzeuges, im Zusatzvolumen ein Druckabfall pro Zeiteinheit entsteht, der dem Dichtheitskriterium für die HL bei der herkömmlichen Dichtheitsprüfung entspricht. Nach Anspruch 3 und 4 ist der zulässige Druckabfall üblicherweise 0,5 bar/min bei Güterzügen und 0,3 bar/min bei Personenzügen.

Wird nun an ein Bremsprobegerät mit einem künstlichen Leck von 0,5 bar/min Druckabfall des Zusatzvolumens V' an ein Eisenbahnfahrzeug angeschlossen, das genau einen Druckabfall von 0,5 bar/min aufweist und somit als gerade noch dicht anzusetzen ist, so stellt sich nach vorheriger Auffüllung des Hauptluftleitungsvolumens V_{HL} und des Zusatzvolumens V' auf den Druck P₁ und Absperrung im Bremsprobegerät nach einer Minute Messzeit ein Druck p₂ ein, wobei sich P₁ - p₂ = 0,5 bar ergibt. In diesem Grenzfall ergibt sich nach dem erfindungsgemäßen Verfahren genau derselbe Druckabfall wie bei einer Dichtheitsprüfung nach dem Stand der Technik.

Schließt man dagegen an ein erfindungsgemäßes Bremsprobegerät ein Eisenbahnfahrzeug mit demselben Hauptluftleitungsvolumen aber einem Druckabfall von weniger als 0,5 bar/min an, dessen Hauptluftleitung somit als dicht anzusetzen ist, so ermittelt das erfindungsgemäße Verfahren einen Druckabfall von weniger als 0,5 bar/min. Weist die Hauptluftleitung beispielsweise ein Leck mit einem Druckabfall von 0,2 bar/min auf, so ermittelt das erfindungsgemäße Verfahren einen Druckabfall zwischen 0,2 und 0,5 bar. Der Druckabfall ist größer 0,2 bar/min sein, weil das Verhältnis Leck (Ausströmquerschnitt) zum eingeschlossenen Volumen größer geworden ist. Ein Druckabfall von 0,5 bar/min kann nicht erreicht werden, weil eben dieses Verhältnis wie im Grenzfall nicht erreicht wird. Das Leck in der Hauptluftleitung ist relativ zum Gesamtvolumen kleiner geworden. Ein Eisenbahnfahrzeug mit einer dichten Hauptluftleitung wird durch das erfindungsgemäße Verfahren somit eindeutig als dicht erkannt.

Bei Anschluss eines Eisenbahnfahrzeuges mit einer undichten Hauptluftleitung an das mit einem künstlichen Leck ausgerüstete Bremsprobegerät, ergibt sich nach dem erfindungsgemäßen Verfahren ein Druckabfall von mehr als 0,5 bar/min. Weist die Hauptluftleitung beispielsweise ein Leck mit einem Druckabfall von 0,8 bar/min auf, so ermittelt das erfindungsgemäße Verfahren einen Druckabfall zwischen 0,8 und 0,5 bar/min. Ein Druckabfall von 0,8 bar kann sich nicht einstellen weil das Verhältnis von Leck (Ausströmquerschnitt) zum eingeschlossenen Gesamtvolumen kleiner geworden ist. Hingegen kann sich ein Druckabfall von 0,5 bar/min nicht einstellen weil das betreffende Verhältnis wie im Grenzfall nicht erreicht wird. Ein Eisenbahnfahrzeug mit einer undichten Hauptluftleitung wird durch das erfindungsgemäße Verfahren somit eindeutig als undicht erkannt.

Bei dem erfindungsgemäßen Verfahren der Dichtheitsprüfung an Hauptluftleitungen wird ein Eisenbahnfahrzeug mit einem Druckabfall in der HL kleiner dem zulässigen Druckabfall nach der herkömmlichen Dichtheitsprüfung etwas schlechter gemessen, im umgekehrten Fall des Druckabfalls größer dem zulässigen Druckabfall nach der herkömmlichen Dichtheitsprüfung etwas aufgebessert. Niemals wird aber ein undichtes Eisenbahnfahrzeug nach dem herkömmlichen Verfahren bei dem neuen Verfahren als dicht klassifiziert und umgekehrt.

Das Bremsprobegerät nach Anspruch 5 speist in einem Auffüllvorgang ein Druckluftnetz einen Druckregler. Der Druckregler stellt einen Volumenstrom konstanten Druckes bereit und speist diesen über ein geöffnetes erstes Magnetventil in die Hauptluftleitung des Eisenahnfahrzeuges. Nach erfolgtem Auffüllvorgang schließt das erste Magnetventil und öffnet ein zweites Magnetventil mit nachgeschaltetem einstellbaren Drosselventil, so dass ein Leckstrom über ein Leck ins Freie strömt.

Das Drosselventil ist hierbei so eingestellt, dass sich im Zusatzvolumen V' bei geschlossenem erstem Magnetventil, geöffnetem zweiten Magnetventil und abgeschlossenem Kupplungskopf ein Leckstrom über das Leck mit dem maximal zulässige Druckabfall Δpₘₐₓ/Δt pro Zeiteinheit einstellt.

Ein Drucksensor überwacht den Druck in der Hauptluftleitung und gibt seine Ausgangssignale an eine Steuerung weiter, die nach einer bestimmten Messzeit, nach Anspruch 6 insbesondere 1 Minute, den resultierenden Druckabfall Δpᵣₑₛ/Δt pro Zeiteinheit ermittelt und mit dem maximal zulässigen Druckabfall Δpₘₐₓ/Δt pro Zeiteinheit vergleicht.

Nach Anspruch 7 erfolgt die Einstellung des Drosselventils insbesondere bei einer Inbetriebnahme der Anlage und/oder bei späteren Wartungsarbeiten. Hierdurch muss während einer normalen Bremsprobe keine weitere Einstellung des Drosselventils mehr durchgeführt werden.

Nach Anspruch 8 ist das Drosselventil mit einem elektromechanischen Stellantrieb versehen, der in Verbindung mit der Steuereinrichtung steht. Mit Hilfe eines entsprechenden Programms erfolgt über einen iterativen Prozess, insbesondere mittels des Newtonschen Verfahrens oder der Regula falsi, durch Betätigung des Stellantriebes die Einstellung des Drosselventils auf den erforderlichen Druckabfall Δp/Δt.

Nach Anspruch 9 sind nach dem Magnetventil und einem Umschalter mehrere Drosselventile parallel geschaltet, über die je nach zu überprüfender Zugart ein Leckstrom mit unterschiedlichem maximal zulässigen Druckabfall Δpₘₐₓ/Δt pro Zeiteinheit über ein oder mehrere Lecks ins Freie strömt. Insbesondere ist ein Drosselventil auf den bei Güterzügen zulässigen Druckabfall von 0,5 bar/min und ein weiteres Drosselventil auf den bei Personenzügen zulässigen Druckabfall von 0,3 bar/min eingestellt.

Je nach dem, welche Zugart an das Bremsprobegerät angeschlossen ist, wird somit der der Zugart entsprechende zulässige Leckstrom durch ein jeweiliges Drosselventil eingestellt. Sollen somit in einer Rangieranlage die Hauptluftleitungen sowohl von Güterzügen als auch Personenzüge auf ihre Dichtheit überprüft werden, müssen nicht mehrere Bremsprobegeräte bereitgestellt werden, sondern kann die Bremsprobe mit einem Bremsprobegerät durchgeführt werden, das entsprechend umgeschaltet wird.

Die Erfindung wird nachstehend anhand von zwei Ausführungsbeispielen und einer Zeichnung mit drei Figuren näher erläutert. Die Figuren zeigen in
- Fig. 1: schematisch eine Bremsprobeanlage, an die ein Eisenbahnfahrzeug angeschlossen ist,
- Fig. 2: schematisch den Aufbau der Bremsprobeanlage,

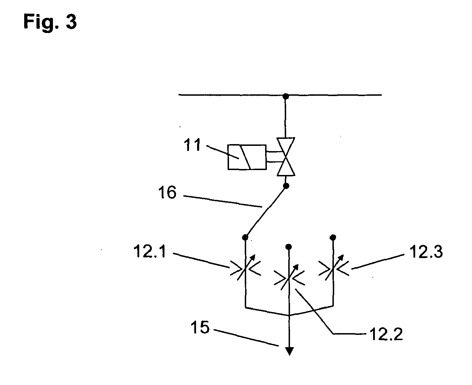

- Fig. 3: schematisch eine Umschaltvorrichtung zwischen mehreren Drosselventilen.

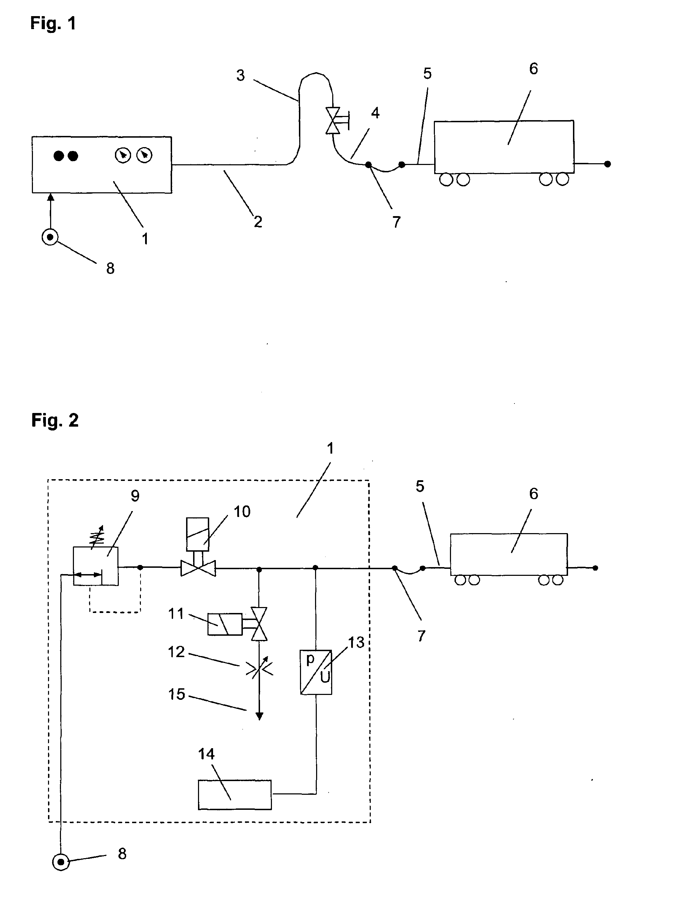

Gemäß Fig. 1 ist das Bremsprobegerät 1 über eine Rohrleitung 2, dem Schlauchständer 3, die Schlauchleitung 4 und dem Kupplungskopf 7 mit der Hauptluftleitung 5 des Eisenbahnfahrzeuges 6 verbunden. In das Bremsprobegerät 1 wird aus einem Druckluftnetz 8 Druckluft eingespeist.

In einem ersten vorteilhaften Ausführungsbeispiel wird gemäß Fig. 2 der im Bremsprobegerät 1 befindliche Druckregler 9 aus dem Druckluftnetz 8 gespeist. Der Druckregler 9 stellt einen Volumenstrom konstanten Druckes bereit und speist diesen über das geöffnete Magnetventil 10 in die Hauptluftleitung 5 des Eisenbahnfahrzeuges 6. Das Magnetventil 11 ist geschlossen. Nach erfolgtem Auffüllvorgang wird zur Dichtheitsprüfung das Magnetventil 10 geschlossen und das Magnetventil 11 geöffnet.

Über das dem Magnetventil 11 Nachgeschaltete einstellbare Drosselventil 12 strömt ein Leckstrom über ein Leck 15 ins Freie.

Die Einstellung des Drosselventils 12 wird bei der Inbetriebnahme der Anlage vorgenommen. Hierbei ist kein Eisenbahnfahrzeug an das Bremsprobegerät angeschlossen, sondern es wird am Kupplungskopf 7 ein luftdichter Verschluss angebracht. Es ist demnach nur das aus der Rohrleitung 2, dem Schlauchständer 3 und der Schlauchleitung 4 gebildete Zusatzvolumen V' an das Bremsprobegerät angeschlossen. Nach Auffüllen des Zusatzvolumens V' über das geöffnete Magnetventil 10 wird dieses geschlossen und das Magnetventil 11 geöffnet. Die Einstellung des Drosselventils 12 wird so vorgenommen, dass genau der zulässige Druckabfall wie bei der herkömmlichen Dichtheitsprüfung in dem Zusatzvolumen V' entsteht.

Mit dem Start der Dichtheitsprüfung durch Schließen des Magnetventils 10 und Öffnen des Magnetventils 11 wird der Druck in der Hauptluftleitung durch den Drucksensor 13 überwacht. Das Ausgangssignal des Drucksensors wird der Steuerung 14 zugeführt.

Nach einer Messzeit von insbesondere einer Minute wird der Druckabfall festgestellt und dieser in der Steuerung mit dem zulässigen Druckabfall verglichen. Bei Überschreitung des zulässigen Druckabfalls wird die HL als undicht klassifiziert, bei einem Druckabfall kleiner gleich dem zulässigen Druckabfall als dicht.

Im zweiten Ausführungsbeispiel sind nach dem Magnetventil 11 und einem Umschalter 16 mehrere Drosselventile 12.1, 12.2 und 12.3 parallel geschaltet. Über diese Drosselventile 12.1, 12.2 und 12.3 strömt je nach zu überprüfender Zugart ein Leckstrom mit unterschiedlichem maximal zulässigen Druckabfall Δpₘₐₓ/Δt pro Zeiteinheit über ein Leck 15 ins Freie. Insbesondere ist Drosselventil 12.1 auf den bei Güterzügen zulässigen Druckabfall von 0,5 bar/min und Drosselventil 12.2 auf den bei Personenzügen zulässigen Druckabfall von 0,3 bar/min eingestellt.

### Bezugszeichenliste

- 1: Bremsprobegerät
- 2: Rohrleitung
- 3: Schlauchständer
- 4: Schlauchleitung
- 5: Hauptluftleitung
- 6: Eisenbahnfahrzeug
- 7: Kupplungskopf
- 8: Druckluftnetz
- 9: Druckregler
- 10: Magnetventil
- 11: Magnetventil
- 12: Drosselventil
- 12.1: Drosselventil
- 12.2: Drosselventil
- 12.3: Drosselventil
- 13: Drucksensor
- 14: Steuerung
- 15: Leck
- 16: Umschalter

### Verwendete Formelzeichen

- V_{HL}: Hauptluftleitungsvolumen
- V': Zusatzvolumen
- p₁: Druck
- p₂: Druck
- A: Öffnungsquerschnitt des Lecks 15
- Δpₘₐₓ/Δt: Druckabfall pro Zeiteinheit
- Δpₘₐₓ/Δt: maximal zulässiger Druckabfall pro Zeiteinheit
- Δpᵣₑₛ/Δt: resultierender Druckabfall pro Zeiteinheit

## Patentansprüche

1. Verfahren zur Dichtheitsprüfung der Hauptluftleitung eines Eisenbahnfahrzeuges durch ein Bremsprobegerät, wobei ein an das Bremsprobegerät angeschlossenes Volumen ein Hauptleitungsvolumen V_{HL} des Eisenbahnfahrzeuges zuzüglich eines Zusatzvolumens V' von Rohr- und Schlauchleitungen zwischen dem Bremsprobegerät und einem Kupplungskopf am Beginn der Hauptluftleitung des Eisenbahnfahrzeuges ist, **dadurch gekennzeichnet, dass**
• das Zusatzvolumen V' aufgefüllt und abgesperrt wird,
• am Zusatzvolumen V' ein definiertes Leck mit einem Öffnungsquerschnitt A geöffnet wird und der Öffnungsquerschnitt A des Lecks dermaßen gewählt wird, dass ein im Zusatzvolumen V' hervorgerufener Druckabfall Δp/Δt pro Zeiteinheit einem maximal zulässigen Druckabfall Δpₘₐₓ/Δt pro Zeiteinheit für die Hauptluftleitung entspricht,
• das Hauptleitungsvolumen V_{HL} des Eisenbahnfahrzeuges an das Zusatzvolumen V' angeschlossen und mit aufgefüllt wird,
• ein resultierender Druckabfall ΔPᵣₑₛ/Δt pro Zeiteinheit des an das Zusatzvolumen V' angeschlossenen Hauptleitungsvolumens V_{HL} ermittelt wird und
• bei einem verglichen mit dem maximal zulässigen Druckabfall Δpₘₐₓ/Δt pro Zeiteinheit kleineren oder gleichen resultierenden Druckabfall Δpᵣₑₛ/Δt pro Zeiteinheit die Hauptluftleitung des Eisenbahnfahrzeuges als dicht beurteilt wird oder
• bei einem verglichen mit dem maximal zulässigen Druckabfall Δpₘₐₓ/Δt pro Zeiteinheit größeren resultierenden Druckabfall Δpᵣₑₛ/Δt pro Zeiteinheit die Hauptluftleitung des Eisenbahnfahrzeuges als undicht beurteilt wird.

2. Verfahren zur Dichtheitsprüfung der Hauptluftleitung eines Eisenbahnfahrzeuges nach Anspruch 1, **dadurch gekennzeichnet, dass** das definierte Leck am Zusatzvolumen V' im Bremsprobegerätes angeordnet wird.

3. Verfahren zur Dichtheitsprüfung der Hauptluftleitung eines Eisenbahnfahrzeuges nach mindestens einem der Ansprüche 1 und 2, **dadurch gekennzeichnet, dass** bei Güterzügen ein maximal zulässiger Druckabfall Δpₘₐₓ/Δt pro Zeiteinheit von 0,5 bar/min gewählt wird.

4. Verfahren zur Dichtheitsprüfung der Hauptluftleitung eines Eisenbahnfahrzeuges nach mindestens einem der Ansprüche 1 und 2, **dadurch gekennzeichnet, dass** bei Personenzügen ein maximal zulässiger Druckabfall Δpₘₐₓ/Δt pro Zeiteinheit von 0,3 bar/min gewählt wird.

5. Bremsprobegerät 1 zur Dichtheitsprüfung der Hauptluftleitung eines Eisenbahnfahrzeuges 6, wobei ein an das Bremsprobegerät 1 angeschlossenes Volumen ein Hauptleitungsvolumen V_{HL} des Eisenbahnfahrzeuges 6 zuzüglich eines Zusatzvolumens V' von Rohr- und Schlauchleitungen zwischen dem Bremsprobegerät 1 und einem Kupplungskopf 7 am Beginn der Hauptluftleitung 5 des Eisenbahnfahrzeuges 6 ist, **dadurch gekennzeichnet, dass**
• in einem Auffüllvorgang ein Druckluftnetz 8 einen Druckregler 9 speist, der Druckregler 9 einen Volumenstrom konstanten Druckes bereit stellt und diesen über ein geöffnete Magnetventil 10 in die Hauptluftleitung 5 des Eisenbahnfahrzeuges 6 speist,
• nach erfolgtem Auffüllvorgang das Magnetventil 10 schließt und ein Magnetventil 11 mit nachgeschaltetem einstellbaren Drosselventil 12 öffnet, so dass ein Leckstrom über ein Leck 15 ins Freie strömt,
• das Drosselventil 12 so eingestellt ist, dass sich im Zusatzvolumen V' bei geschlossenem Magnetventil 10, geöffnetem Magnetventil 11 und abgeschlossenem Kupplungskopf 7 ein Leckstrom über das Leck 15 mit dem maximal zulässige Druckabfall Δpₘₐₓ/Δt pro Zeiteinheit einstellt,
• ein Drucksensor 13 den Druck in der Hauptluftleitung überwacht und eine Steuerung 14 nach einer bestimmten Messzeit den resultierenden Druckabfall ΔPᵣₑₛ/Δt pro Zeiteinheit ermittelt und mit dem maximal zulässigen Druckabfall Δpₘₐₓ/Δt pro Zeiteinheit vergleicht.

6. Bremsprobegerätverfahren zur Dichtheitsprüfung der Hauptluftleitung eines Eisenbahnfahrzeuges nach Anspruch 5, **dadurch gekennzeichnet, dass** die Messzeit 1 Minute beträgt.

7. Bremsprobegerätverfahren zur Dichtheitsprüfung der Hauptluftleitung eines Eisenbahnfahrzeuges nach mindestens einem der Ansprüche 5 und 6, **dadurch gekennzeichnet, dass** die Einstellung des Drosselventils 12 bei einer Inbetriebnahme der Anlage und/oder bei Wartungsarbeiten erfolgt.

8. Bremsprobegerät zur Dichtheitsprüfung der Hauptluftleitung eines Eisenbahnfahrzeuges nach mindestens einem der Ansprüche 5 bis 7 **dadurch gekennzeichnet, dass** das Drosselventil 12 mit einem elektromechanischen Stellantrieb versehen ist, der in Verbindung mit der Steuereinrichtung 14 steht und das mit Hilfe eines entsprechenden Programms über einen iterativen Prozess durch Betätigung des Stellantriebes die Einstellung des Drosselventils 12 auf den erforderlichen Druckabfall Δp/Δt erfolgt.

9. Bremsprobegerät zur Dichtheitsprüfung der Hauptluftleitung eines Eisenbahnfahrzeuges nach mindestens einem der Ansprüche 5 bis 8, **dadurch gekennzeichnet, dass** nach dem Magnetventil 11 und einem Umschalter 16 mehrere Drosselventile parallel geschaltet sind, über die je nach zu überprüfender Zugart ein Leckstrom mit unterschiedlichem maximal zulässigen Druckabfall Δpₘₐₓ/Δt pro Zeiteinheit über ein oder mehrere Lecks ins Freie strömt.
